# EUROPEAN PATENT SPECIFICATION

(11) **EP 0 541 293 B1**
(45) Date of publication and mention of the grant of the patent: **17.05.1995**
(21) Application number: 92309918.8
(22) Date of filing: 29.10.1992
(51) Int. Cl.: F01N 7/08, F01N 3/30

(54) **A valve**
Ventil
Soupape

(30) Priority: 05.11.1991 GB 9123486
(43) Date of publication of application: 12.05.1993
(73) Proprietor: Tennex Europe Limited, Salisbury, Wiltshire SP4 6AT (GB)
(72) Inventor: Hallam, William Wood, Southampton, SO3 6WR (GB); Gretton, Peter Howard, Southampton, SO4 1PG (GB)
(74) Representative: Flegg, Christopher Frederick

(56) References cited:
- FR-A- 1 279 334
- US-A- 3 034 290
- US-A- 4 518 363
- PATENT ABSTRACTS OF JAPAN vol. 4, no. 88 (M-17) 24 June 1980 & JP-A-55 046 079 (MATSUSHITA ELECTRIC WORKS) 31 March 1980

## Description

This invention relates to a valve for excluding water from an air intake and in particular but not exclusively for excluding water from the air intake of an automotive catalytic converter and having a dust excluding filter.

It is known to provide petrol driven vehicle engines with a catalytic converter to reduce unwanted exhaust emissions. During an initial start up period in which the engine will not have reached its normal operating temperature it is known to provide a supplementary air flow to the catalytic converter in order to enhance its oxidation efficiency. An air pump is therefore connected to the catalytic converter and is operable during the start up period to pump air from an air intake into the catalytic converter.

A problem with such air intakes is that they are typically located close to the ground due to physical constraints of the vehicle design and it is essential that water is excluded from the air provided to the catalytic converter if correct operation is to be ensured.

It is also known from US 4518363 in the context of a marine engine to provide a valve for excluding water from an air intake comprising a housing defining a chamber, an inlet to the chamber and a valve seat defining an outlet which is connectable in use to the air intake, the valve further comprising a buoyant valve member within the chamber which is movable into engagement with the valve seat to close the outlet in the presence of liquid in the chamber.

According to the present invention the valve further comprises a baffle partitioning the chamber into upstream and downstream portions communicating with the inlet and outlet respectively, the baffle defining at least one passageway providing restricted air flow between the upstream and downstream portions to create in use a pressure differential between the respective portions and further defining an aperture within which the valve member normally rests such that the valve member is movable into engagement with the valve seat in response to the pressure differential exceeding a threshold value.

An advantage of such a valve is that it functions firstly to shut off the supply of air to the air intake if the inlet is immersed in water which might for example arise if the vehicle were driving through flood water. Secondly, the valve operates to shut off the air supply to the intake if the air entering the inlet carries water in mist form such as for example would arise in heavy rain conditions. The presence of mist in the air admitted to the chamber has the effect of increasing the mass flow rate through the chamber to a sufficient level to increase the pressure differential above the threshold level required to move the valve member into engagement with the valve seat.

The valve member may be spherical. The baffle may comprise a plate in which the aperture is centrally formed and a plurality of passageways are provided peripherally with respect to the aperture.

Preferably the valve comprises guide means operable to guide the valve member between its rest position and the position in which it engages the valve seat.

The guide means may conveniently comprise a plurality of ribs spaced circumferentially with respect to the valve member and extending between the aperture and the valve seat.

The housing may comprise an outlet tube communicating with the chamber and having an end face constituting the valve seat.

Preferably the valve comprises filter means communicating with the inlet and operable to filter dust and large droplets of water from air entering the inlet.

The filter means may comprise a mesh filter element.

The mesh filter element may be located within the housing at a location upstream of the inlet.

The baffle may comprise a tubular projection defining an airway communicating with the aperture, the tubular projection defining at least one air inlet hole and defining a frusto-conical lower seat upon which the valve member normally rests, the lower seat being located intermediate the air inlet hole and the aperture such that the valve member is operable in its normal position to close the airway by contact with the lower seat.

By supporting the valve member in contact with a frusto-conical lower seat it is thereby held in a stable rest position and is less susceptible to being dislodged by vibration in use.

The valve may comprise a porous pad located within the downstream portion and operable to promote condensation of airborne water vapour.

Conveniently the porous pad comprises polypropylene mesh.

Particular embodiments of the present invention will now be described by way of example only and with reference to the accompanying drawings of which:-
Figure 1 is a sectional elevation of a valve in accordance with the present invention;
Figure 2 is a plan view of the valve of Figure 1 sectioned at II-II with the valve member removed;
Figure 3 is a plan view sectioned at III-III of the valve of Figure 1 with the valve member removed;
Figure 4 is a sectional elevation of an alternative valve in accordance with the present invention;
Figure 5 is an underneath plan view sectioned at V-V of the valve of Figure 4; and
Figure 6 is a perspective partly sectioned view of a baffle plate assembly of the valve of Figures 4 and 5.

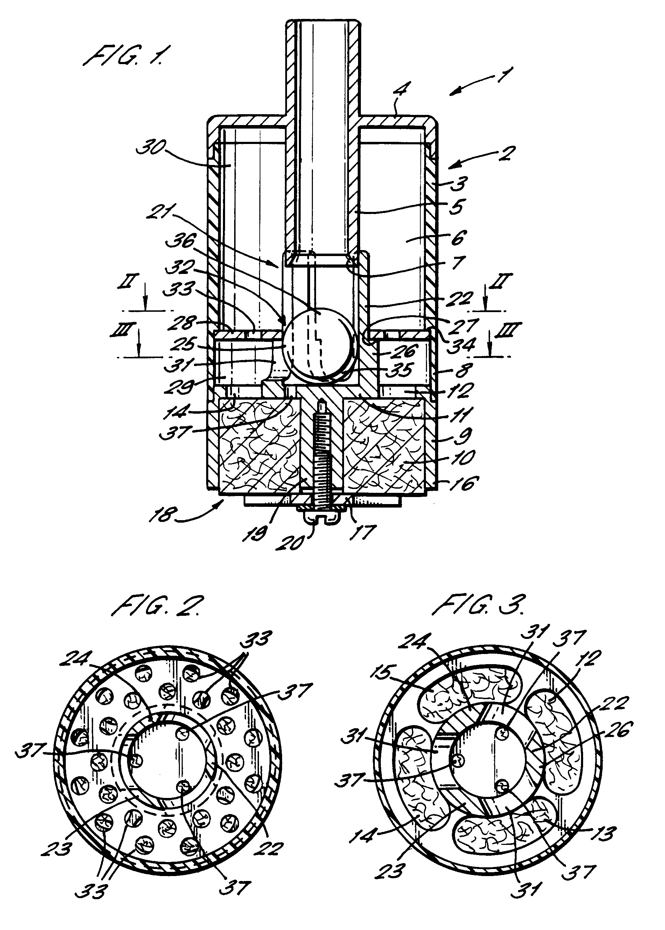

Figure 1 shows a valve 1 having a tubular housing 2 of which a central tubular portion 3 is formed of a transparent plastics material.

An aluminium upper end cap 4 is connected to the central tubular portion 3 and is formed integrally with an outlet tube 5 which projects axially into a cylindrical chamber 6 defined by the housing 2. The outlet tube 5 has an end face within the chamber 6 which is frusto-conical in shape and constitutes a valve seat 7.

The central tubular portion 3 has a lower end portion 8 which is connected to an aluminium tubular filter housing 9 containing a stainless steel mesh filter element 10.

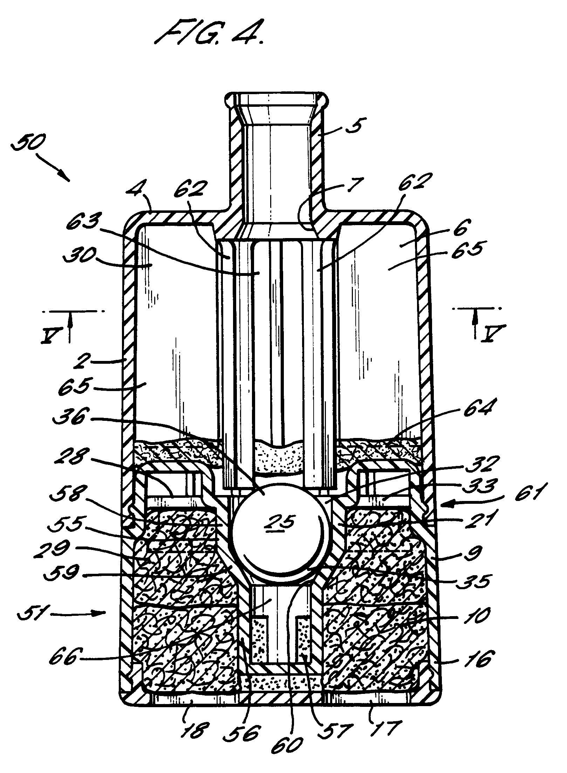

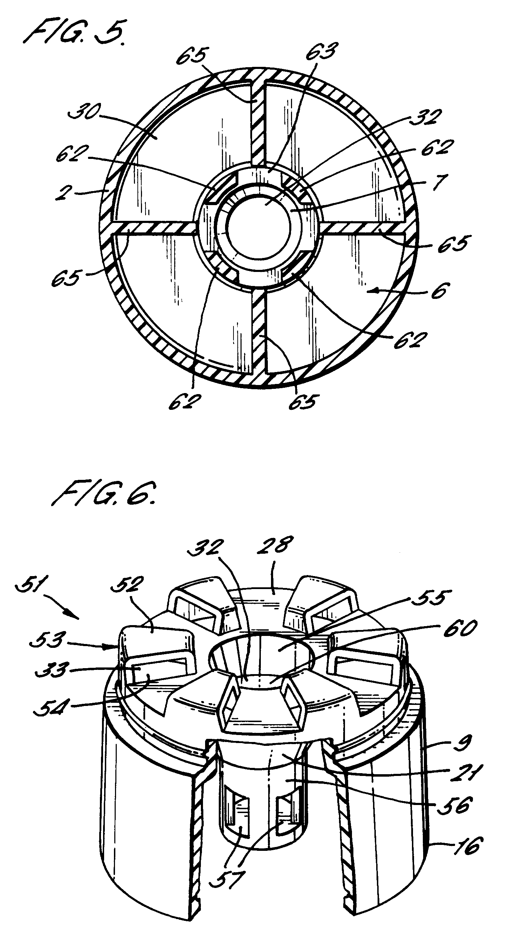

The filter housing 9 includes an upper end wall 11 which defines the lower extremity of chamber 6 and is provided with four circumferentially spaced part annular slots 12, 13, 14 and 15 as shown in Figure 3.

The filter housing 9 has a lower end portion 16 which is normally partially closed by a retaining spider member 17 which retains the filter element 10 within the housing such that an orifice 18 is formed between the retaining spider member and the lower end portion.

A central spigot 19 depends from the upper end wall 11 and is provided with a screw fitting 20 which retains the retaining spider member 17.

Three spaced apart holes 37 are provided in the upper end wall 11 within the cage 21 and communicate with the interior of the filter housing 9.

A cage 21 is formed integrally with the upper end wall 11 and extends upwardly into the chamber 6, the cage comprising three circumferentially spaced ribs 22, 23 and 24 which extend into external contact with the outlet tube 5.

A spherical valve member 25 is located within the cage 21 and is shown in Figure 1 in its normal rest position in contact with the upper end wall 11.

The valve member 25 is formed of polypropylene and is lighter than water so as to be buoyant in water.

As shown in Figure 1, rib 22 has a thickened lower portion 26 forming a shoulder 27 upon which rests a baffle plate 28 which forms a partition dividing the chamber 6 into an upstream portion 29 and a downstream portion 30. Ribs 23 and 24 are similarly configured with thickened lower portions 26 which are spaced apart by gaps 31.

The baffle plate 28 is provided with a central aperture 32 and a series of smaller holes 33 distributed circumferentially around the central aperture and constituting passageways communicating between the upstream and downstream portions 29 and 30.

The central tubular portion 3 is provided with an internal shoulder 34 which rests on the baffle plate 28 so that the baffle plate is clamped in position between the internal shoulder 34 and the external shoulder 27 provided on each of the ribs 22, 23 and 24.

The baffle plate 28 is maintained by the shoulders 27 in parallel spaced relationship relative to the upper end wall 11 and is separated from the upper end wall by a distance which is slightly greater than the radius of the valve member 25. In its rest position the valve member 25 extends through the central aperture 32 so that an upper portion 36 of the valve member projects into the downstream portion 30 of chamber 6 and a lower portion 35 of the valve member projects into the upstream portion 29.

In use the valve 1 is fitted to a vehicle in an orientation in which the outlet tube 5 normally extends vertically upwards as shown in Figure 1 and is connected to the air intake of an air pump (not shown) which is arranged to deliver air to a catalytic converter. (The orientation of the valve 1 will vary in use with movement of the vehicle and is designed to operate satisfactorily within limits of 30 degrees from vertical.) Orifice 18 of the valve 1 is exposed to ambient air.

When the vehicle engine is operated the pump operates during an initial start up period which is determined by the time taken for the catalytic converter to reach its optimum working temperature. This period typically lasts a maximum of three minutes and during this time air is exhausted from the outlet tube 5 creating an air flow through the orifice 18, through the filter element 10, the slots 12 and into the upstream portion 29 of chamber 6. Valve member 25 initially is in its rest position in contact with upper end wall 11 and extending through the central aperture 32 of baffle plate 28. Air is drawn into the downstream portion 30 of chamber 6 through the passageways 33 and some air will also pass through the central aperture 32 due to incomplete closure of the aperture by the valve member 25.

Because the baffle 28 provides a restriction to air flow a pressure differential is created across the baffle i.e. the air pressure within the upstream portion 29 exceeds the air pressure in the downstream portion 30. The valve member 25 however remains in its rest position provided that the chamber 6 receives air which is substantially uncontaminated with water or mist.

If during the start up period the orifice 18 is submerged in water then water drawn into the chamber 6 will result in the valve member 25 floating into engagement with the valve seat 7, the valve member being guided into this position by the ribs 22, 23 and 24. Once in engagement with the valve seat 7, the valve member 25 is maintained in sealing contact with the valve seat by the effect of suction within the outlet tube 5 so that the valve 1 remains closed until such time as the pump is turned off. During this period, no air is supplied to the pump and the catalytic converter will therefore function without the benefit of any supplementary air flow but will however be protected from the influx of water by operation of the valve.

If instead during the start up period the orifice 18 is exposed to mist or water spray, the air laden with mist will be drawn into the chamber 6 through the filter element 10. The filter element 10 will remove large droplets of water from the air which will then drain out of the filter housing 9 through the orifice 18. The air entering the chamber 6 will however continue to include fine mist droplets which could if allowed to exit through the outlet tube cause damage to the catalytic converter. The valve 1 operates to exclude such mist because the mass air flow passing through the baffle plate 28 is substantially increased in the presence of water mist thereby resulting in an increased pressure differential between the upstream and downstream portions 30 and 28. In response to this increased pressure differential the valve member 25 is urged upwardly by virture of the lower portion 35 being exposed to air at high pressure within the upstream portion and an upper portion 36 being exposed to air at a lower pressure within the downstream portion 30. Pressure differential exceeding a threshold value will overcome the weight of the valve member 25 and result in the valve member being forced into engagement with the valve seat 7 to thereby close the valve 1. Once closed the valve 1 continues to remain closed until such time as the pump is shut off.

The threshold value is determined by a number of factors such as the weight of the valve member and the degree to which the baffle restricts air flow through the chamber. In the example described above the valve member is a polypropylene sphere having a specific gravity of 0.93 and diameter of 19.05 mm. The baffle includes 24 holes of 4 mm diameter and the holes 37 are of 3mm diameter. The valve is designed for use with a pump delivering suction measured at 12 inches of water at the valve outlet.

A second embodiment of the present invention will now be described with reference to Figures 4, 5 and 6 using corresponding reference numerals to those of preceding Figures where appropriate for corresponding elements.

The second valve 50 of Figure 4 includes a baffle plate assembly 51 as shown in perspective in Figure 6 in which baffle plate 28 is formed integrally with a filter housing 9 and a cage 21. The baffle plate 28 constitutes an upper end wall of the filter housing 9 so that a filter element 10 extends into contact with the baffle plate.

The baffle plate 28 defines six circumferentially spaced passageways 33 which are overlaid by respective vanes 52 provided by respective castellations 53 formed integrally with the baffle plate. The vanes 52 are spaced from the baffle plate 28 to define lateral passageways 54 communicating with the passageways 33 so that air flowing upwardly through the passageways 33 is deflected to exit laterally from the lateral passageways 54.

The baffle plate 28 merges with a tubular projection 55 defining a central aperture 32 and projecting co-axially with cylindrical housing 2 in a direction towards an air inlet orifice 18. The tubular projection 55 defines a cage 21 receiving a spherical valve member 25 and has an end portion 56 of reduced diameter which defines four circumferentially spaced side holes 57 for the inlet of ambient air adjacent to the orifice 18.

The tubular projection 55 comprises an upper cylindrical portion 58 of greater internal diameter than the end portion 56 and joined to the end portion 56 by a conically tapering portion 59 which defines internally a frusto-conical lower seat 60 upon which the valve member 25 normally rests.

An outlet tube 5 merges with the housing 2 and defines a valve seat 7 which is frusto-conical in shape and against which the valve member 25 makes sealing contact when in a fully raised position (as for example when the chamber 6 defined by the housing 2 becomes filled with liquid).

The generally cylindrical housing 2 comprises an upper end cap 4 formed integrally with the outlet tube 5 and which is engageable by snap-fit formations 61 with the baffle plate assembly 51. Formed integrally with the upper end cap 4 are four circumferentially spaced axially extending guide ribs 62 which extend from locations peripheral to the valve seat 7 into close proximity with the baffle plate 28.

The guide ribs 62 are spaced apart to define axially extending slots 63 providing communication between the outlet tube 5 and the downstream portion 30 of chamber 6 defined by the housing 2.

An annular porous pad 64 is located within the downstream portion 30 and peripherally with respect to the guide ribs 62 at a location immediately adjacent the vanes 52 of the baffle plate assembly 51, the pad being formed of a fine polypropylene mesh.

The pad 64 is spaced from the baffle plate 28 by the castellations 53 so that air flowing through passageways 33 and 54 is unobstructed by the pad 64.

The pad 64 is retained in axial position by four circumferentially spaced webs 65 formed integrally with the upper end cap 4 and extending in respective planes which are radial relative to the cylindrical axis of the housing 2. The webs 65 are offset as viewed in axial projection as in 55 from the guide ribs 62 such that the downstream portion 30 is partitioned into four volumes which are interconnected via the slots 63.

In use the second valve 50 is fitted to a vehicle in an orientation in which the outlet tube 5 normally extends vertically upwards and is connected to the air intake of an air pump arranged to deliver air to a catalytic converter. The orifice 18 of the valve 50 is exposed to ambient air.

During engine warm-up, air is drawn through the outlet tube 5 such that ambient air is drawn through the filter element 10, through the passageways 33 and 54 of the baffle plate 28 and into the downstream portion 30 of chamber 6. The filter element 10 serves to filter the air to remove particulate material. The porous pad 64 promotes condensation of airborne water vapour and mist within the downstream portion 30, the condensate being able to drain through the passageways 33 and 54 in the baffle plate 28. The pad 64 also provides some additional filtering of the air.

The valve member 25 is normally seated on the lower seat 60 which because of its frusto-conical shape tends to resist displacement of the valve member due to vibration. In this respect the second valve 50 is an improvement over the first embodiment valve 1 in that it is less susceptible to the valve member 25 being dislodged into seating engagement with the valve seat 7 by vibration effects alone. This effect is further enhanced by the valve seat 7 being axially spaced from the normal rest position of the valve member 25 by a greater distance in the second embodiment.

The action of the second valve 50 in shutting off air flow under wet air conditions is similar to the mode of operation described above with reference to the first embodiment. The valve member 25 when seated upon the lower seat 60 has an upper portion 36 exposed to air at the reduced working air pressure of the downstream portion 30 and a lower portion 35 which is exposed to ambient air pressure via the side holes 57 in the tubular projection 55. This imbalance of pressure becomes enhanced when the air flowing through the second valve 15 is heavily laden with moisture thereby dislodging the valve member 25 in an upward direction into sealing contact with the valve seat 7 to thereby shut off the air flow to the catalytic converter.

A baffle of alternative shape may be employed, for example an umbrella shaped disc may be used in which the baffle plate slopes downwardly with increasing radius. The holes 37 of the first embodiment may be omitted provided that satisfactory operation is obtained using appropriate dimensions of other components.

A valve in accordance with the present invention may alternatively be provided with a vortex filter providing centrifugal removal of dust particles and larger droplets of liquid. This may be in addition to or in place of the mesh filter element described above.

## Claims

1. A valve (1,50) for excluding water from an air intake comprising a housing (2) defining a chamber (6), an inlet (18) to the chamber and a valve seat (7) defining an outlet which is connectable in use to the air intake, the valve further comprising a buoyant valve member (25) within the chamber which is movable into engagement with the valve seat to close the outlet in the presence of liquid in the chamber and characterised by a baffle (28,51) partitioning the chamber into upstream and downstream portions (29,30) communicating with the inlet and outlet respectively, the baffle defining at least one passageway (33) providing restricted air flow between the upstream and downstream portions to create in use a pressure differential between the respective portions and further defining an aperture (32) within which the valve member normally rests such that the valve member is movable into engagement with the valve seat in response to the pressure differential exceeding a threshold value.

2. A valve as claimed in Claim 1 wherein the valve member is spherical.

3. A valve as claimed in any preceding claim wherein the baffle comprises a plate (28) in which the aperture is centrally formed and a plurality of passageways (33) are provided peripherally with respect to the aperture.

4. A valve as claimed in any preceding claim comprising guide means (22,23,24;62) operable to guide the valve member between its rest position and valve seat engaging position.

5. A valve as claimed in Claim 4 wherein the guide means comprises a plurality of ribs (22,23,24;62) spaced circumferentially with respect to the valve member and extending between the aperture and the valve seat.

6. A valve as claimed in any preceding claim further comprising an outlet tube (5) communicating with the chamber and having an end face constituting the valve seat.

7. A valve as claimed in any preceding claim further comprising filter means (10) communicating with the inlet and operable to filter large droplets of water from air entering the inlet,

8. A valve as claimed in Claim 7 wherein the filter means comprises a mesh filter element (10).

9. A valve (50) as claimed in any preceding claim wherein the baffle comprises a tubular projection (55) defining an airway (66) communicating with the aperture, the tubular projection defining at least one air inlet hole (57) and defining a frusto-conical lower seat (60) upon which the valve member normally rests, the lower seat being located intermediate the air inlet hole and the aperture such that the valve member is operable in its normal position to close the airway by contact with the lower seat.

10. A valve as claimed in any preceding claim comprising a porous pad (64) located within the downstream portion and operable to promote condensation of airborne water vapour.

11. A valve as claimed in claim 10 wherein the porous pad comprises polypropylene mesh.

## Patentansprüche

1. Ventil (1, 50) zum Fernhalten von Wasser von einem Lufteinlaß, umfassend ein Gehäuse (2), das eine Kammer (6) festlegt, einen Einlaß (18) zu der Kammer und einen Ventilsitz (7), der einen im Gebrauch mit dem Lufteinlaß verbindbaren Auslaß festlegt, wobei das Ventil ferner ein schwimmfähiges Ventilelement (25) in der Kammer umfaßt, das in Eingriff mit dem Ventilsitz bewegbar ist, um den Auslaß bei Vorhandensein von Flüssigkeit in der Kammer zu verschließen, und **gekennzeichnet** ist durch ein Drosselelement (28, 51), das die Kammer in stromaufwärtige und stromabwärtige, mit dem Einlaß bzw. dem Auslaß in Verbindung stehende Abschnitte (29, 30) unterteilt, wobei das Drosselelement wenigstens einen Durchgang (33) festlegt, der für eine begrenzte Luftströmung zwischen den stromaufwärtigen und stromabwärtigen Abschnitten sorgt, um im Gebrauch ein Druckdifferential zwischen den jeweiligen Abschnitten zu erzeugen, und ferner eine Öffnung (32) festlegt, in welcher das Ventilelement normalerweise ruht, so daß das Ventilelement in Eingriff mit dem Ventilsitz bewegbar ist in Antwort darauf, daß das Druckdifferential einen Schwellenwert überschreitet.

2. Ventil nach Anspruch 1, bei welchem das Ventilelement sphärisch ist.

3. Ventil nach einem der vorhergehenden Ansprüche, bei welchem das Drosselelement eine Platte (28) umfaßt, in welcher zentral die Öffnung ausgebildet ist und in Umfangsrichtung bezüglich der Öffnung eine Mehrzahl von Durchgängen (33) vorgesehen ist.

4. Ventil nach einem der vorhergehenden Ansprüche, umfassend eine Führungseinrichtung (22,23,24;62), welche zur Führung des Ventilelements zwischen seiner Ruhestellung und seiner Ventilsitzeingriffsstellung betreibbar ist.

5. Ventil nach Anspruch 4, bei welchem die Führungseinrichtung eine Mehrzahl von Rippen (22,23,24;62) umfaßt, die in Umfangsrichtung bezüglich des Ventilelements im Abstand angeordnet sind und sich zwischen der Öffnung und dem Ventilsitz erstrecken.

6. Ventil nach einem der vorhergehenden Ansprüche, ferner umfassend ein Auslaßrohr (5), das mit der Kammer in Verbindung steht und eine den Ventilsitz bildende Endfläche aufweist.

7. Ventil nach einem der vorhergehenden Ansprüche, ferner umfassend eine Filtereinrichtung (10), welche mit dem Einlaß in Verbindung steht und zum Filtern großer Wassertröpfchen aus der in den Einlaß eintretenden Luft betreibbar ist.

8. Ventil nach Anspruch 7, bei welchem die Filtereinrichtung ein Netz-Filterelement (10) umfaßt.

9. Ventil nach einem der vorhergehenden Ansprüche, bei welchem das Drosselelement einen rohrförmigen Vorsprung (55) umfaßt, der einen mit der Öffnung in Verbindung stehenden Luftweg (66) festlegt, wobei der rohrförmige Vorsprung wenigstens ein Lufteinlaßloch (57) und einen kegelstumpfförmigen unteren Sitz (60) festlegt, auf welchem das Ventilelement normalerweise ruht, wobei der untere Sitz zwischen dem Lufteinlaßloch und der Öffnung angeordnet ist derart, daß das Ventilelement in seiner Normalstellung zum Verschließen des Luftwegs durch Kontakt mit dem unteren Sitz betreibbar ist.

10. Ventil nach einem der vorhergehenden Ansprüche, umfassend ein poröses Polster (64), das in dem stromabwärtigen Abschnitt angeordnet ist und zur Unterstützung von Kondensation von in der Luft mitgeführtem Wasserdampf betreibbar ist.

11. Ventil nach Anspruch 10, bei welchem das poröse Polster ein Polypropylen-Netz umfaßt.

## Revendications

1. Soupape (1, 50) destinée à exclure l'eau d'une admission d'air, comprenant un boîtier (2) définissant une chambre (6), une entrée (18) dans la chambre et un siège de soupape (7) définissant une sortie qui peut être connectée, lors de l'utilisation, à l'admission d'air, la soupape comprenant en outre un élément de soupape flottant (25) disposé à l'intérieur de la chambre, qui peut être déplacé jusqu'en engagement avec le siège de soupape de manière à fermer la sortie en présence d'un liquide dans la chambre, et caractérisée par une chicane (28, 51) divisant la chambre en une partie amont et une partie aval (29, 30) communiquant respectivement avec l'entrée et avec la sortie, la chicane définissant au moins un chemin de passage (33) permettant un écoulement d'air restreint entre les parties amont et aval, de manière à créer, lors de l'utilisation, une différence de pression entre les parties correspondantes, et définissant en outre une ouverture (32) à l'intérieur de laquelle l'élément de soupape repose normalement, de manière que l'élément de soupape puisse être déplacé jusqu'en engagement avec le siège de soupape en réponse au fait que la différence de pression dépasse une valeur seuil.

2. Soupape selon la revendication 1, dans laquelle l'élément de soupape est sphérique.

3. Soupape selon l'une quelconque des revendications précédentes, dans laquelle la chicane comprend une plaque (28), au centre de laquelle une ouverture est formée, et dans laquelle plusieurs passages (33) sont disposés de façon périphérique par rapport à l'ouverture.

4. Soupape selon l'une quelconque des revendications précédentes, comprenant des moyens guides (22, 23, 24; 62) fonctionnant de manière à guider l'élément de soupape entre sa position de repos et la position de contact avec le siège de soupape.

5. Soupape selon la revendication 4, dans laquelle les moyens guides comprennent plusieurs nervures (22, 23, 24; 62) espacées dans le sens de la circonférence, par rapport à l'élément de soupape, et s'étendant entre l'ouverture et le siège de soupape.

6. Soupape selon l'une quelconque des revendications précédentes, comprenant en outre un tube de sortie (5) communiquant avec la chambre et comportant une face terminale constituant le siège de soupape.

7. Soupape selon l'une quelconque des revendications précédentes, comprenant en outre des moyens filtrants (10) communiquant avec l'entrée et fonctionnant de manière à filtrer des grosses gouttelettes d'eau de manière à les éliminer de l'air entrant dans l'entrée.

8. Soupape selon la revendication 7, dans laquelle les moyens filtrants comprennent un élément filtrant à mailles (10).

9. Soupape (50) selon l'une quelconque des revendications précédentes, dans laquelle la chicane comprend un prolongement tubulaire (55) définissant un passage d'air (66) communiquant avec l'ouverture, le prolongement tubulaire définissant au moins un trou d'entrée d'air (57) et définissant un siège inférieur (60) en forme de cône tronqué sur lequel repose normalement l'élément de soupape, le siège inférieur étant situé entre le trou d'entrée d'air et l'ouverture, de manière telle que l'élément de soupape puisse fonctionner, dans sa position normale, de manière à fermer le passage d'air en entrant en contact avec le siège inférieur.

10. Soupape selon l'une quelconque des revendications précédentes, comprenant un tampon poreux (64) situé à l'intérieur de la partie aval et pouvant fonctionner de manière à favoriser la condensation de la vapeur d'eau véhiculée par l'air.

11. Soupape selon la revendication 10, dans laquelle le tampon poreux comprend des fibres de polypropylène.
